# EUROPEAN PATENT APPLICATION

(11) **EP 2 645 706 A2**
(43) Date of publication of application: **02.10.2013**
(21) Application number: 13161614.6
(22) Date of filing: 28.03.2013
(51) Int. Cl.: H04N 5/32, H04N 5/355, H04N 5/3745

(54) **Programmable readout integrated circuit for an ionizing radiation sensor**

(30) Priority: 28.03.2012 US 201213432562
(71) Applicant: Luxen Technologies, Inc., Seoul 121-835 (KR); Soh, Myung-Jin, Langley, British Columbia V2Y 0B2 (CA)
(72) Inventor: Soh, Myung-Jin, Langley British Columbia V2Y0B2 (CA); Soh, Seul-Yi, Langley British Columbia V2Y0B2 (CA)
(74) Representative: Patentanwälte Freischem

(57) **Abstract**

Embodiments of the present invention provide a computer-implemented method for setting an amplification gain of a pixel array. Specifically, among other things, embodiments of the present invention provide a computer-implemented infrastructure comprising: receiving an electrical signal from an ionizing radiation source at one or more pixel sensors of a plurality of pixel sensors within the pixel array; setting an amplification gain of the electrical signal at a charge sensitive amplifier by turning a switch on or off, wherein the switch connects the at least one or more pixel sensors to a respective capacitor; scanning the pixel array to determine the ionizing radiation source intensity; and generating a gain control signal based on the ionizing radiation source intensity.

## Description

### FIELD OF THE INVENTION

The present invention relates to ionizing radiation image sensors. More specifically, the present invention is related to a readout integrated circuit for an ionizing radiation sensor.

### BACKGROUND OF THE INVENTION

The discovery of ionizing radiation (e.g., gamma rays, X-rays, alpha rays, beta rays, neutron radiation) in 1895 was the beginning of a revolutionary change in our understanding of the physical world.

One important form of ionization radiation is the X-Ray. Today, digital X-ray imaging devices are rapidly replacing photographic film-based X-ray imaging devices in medical applications (e.g., dental applications and mammography). In addition to the inherent advantages associated with digital imaging, digital X-ray imaging devices can have the added benefit of being able to reduce the radiation dose received by a patient.

Typically, the readout circuit of an X-ray sensor converts each photon into an electrical voltage. The dynamic range of the X-ray sensor may be limited. For example, when a strong X-ray is emitted, the readout circuit may not go over a certain readout voltage. In such instances, it may be measured at the same output level as a weaker X-ray. With current readout integrated circuits, the CSA gain is fixed. Therefore, there is no way to increase the intensity of the X-ray. Thus, when the X-ray is converted into an image, the intensity cannot be increased. Because of this problem, variations occur among the pixels due to limitation of pixel array readout integrated circuit (ROIC) in the manufacturing process. Therefore, each pixel data becomes different when the X-ray is received, causing fuzzy images.

There is a need to increase the dynamic range of an X-ray sensor. Heretofore, several unsuccessful attempts have been made to address these shortcomings.

U.S. Patent Application 20110108735 A1 discloses a high dynamic range X-ray detector with improved signal to noise ratio.

U.S. Patent 5789737 discloses a high dynamic range segmented pixel sensor array.

U.S. Patent 6633657 discloses a method and apparatus for controlling the dynamic range of a digital diagnostic image.

U.S. Patent Application 20090168966 discloses a medical digital X-ray imaging apparatus and medical digital X-ray sensor.

U.S. Patent Application 20030035510 discloses a sensor arrangement and method in digital X-ray imaging.

U.S. Patent Application 20090108207 discloses a CMOS sensor adapted for dental X-ray imaging.

U.S. Patent Application 20100171038 discloses a sensor unit for an X-ray detector and associated production method.

U.S. Patent Application 20100102241 discloses a system and method for automatic detection of X-rays at an X-ray sensor.

None of these references, however, teach a readout circuit for increasing the dynamic range of an ionizing radiation sensor.

### SUMMARY OF THE INVENTION

In general, embodiments of the present invention provide a computer-implemented method for setting an amplification gain of a pixel array. Specifically, among other things, embodiments of the present invention provide a computer-implemented infrastructure comprising: receiving an electrical signal from an ionizing radiation source at one or more pixel sensors of a plurality of pixel sensors within the pixel array; setting an amplification gain of the electrical signal at a charge sensitive amplifier by turning a switch on or off, wherein the switch connects the at least one or more pixel sensors to a respective capacitor; scanning the pixel array to determine the ionizing radiation source intensity; and generating a gain control signal based on the ionizing radiation source intensity.

In one embodiment, there is an integrated circuit module configured to adjust an amplification gain of a pixel array, comprising: a pixel array, wherein each pixel within the pixel array comprises a pixel sensor configured to receive an electrical signal from an ionizing radiation source; and a charge sensitive amplifier comprising a capacitor and a switch for connecting the pixel sensor to the capacitor, the charge sensitive amplifier configured to control the amplification gain of the electrical signal by turning the switch on or off; and a controller configured to scan the pixel array to determine the ionizing radiation source intensity and generate a gain control signal based on the ionizing radiation source intensity.

In a second embodiment, there is a computer-implemented method for setting an amplification gain of a pixel array, comprising: receiving an electrical signal from an ionizing radiation source at one or more pixel sensors of a plurality of pixel sensors within the pixel array; setting an amplification gain of the electrical signal at a charge sensitive amplifier by turning a switch on or off, wherein the switch connects the at least one or more pixel sensors to a respective capacitor; scanning the pixel array to determine the ionizing radiation source intensity; and generating a gain control signal based on the ionizing radiation source intensity.

In a third embodiment, there is a computer-readable storage device storing computer instructions which, when executed, enables a computer system to set an amplification gain of a pixel array, the computer instructions comprising: receiving an electrical signal from an ionizing radiation source at one or more pixel sensors of a plurality of pixel sensors within the pixel array; setting an amplification gain of the electrical signal at a charge sensitive amplifier by turning a switch on or off, wherein the switch connects the at least one or more pixel sensors to a respective capacitor; scanning the pixel array to determine the ionizing radiation source intensity; and generating a gain control signal based on the ionizing radiation source intensity.

Embodiments of the present invention provide a computer-implemented method for setting an amplification gain of a pixel array. Specifically, among other things, embodiments of the present invention provide a computer-implemented infrastructure comprising: receiving an electrical signal from an ionizing radiation source at one or more pixel sensors of a plurality of pixel sensors within the pixel array; setting an amplification gain of the electrical signal at a charge sensitive amplifier by turning a switch on or off, wherein the switch connects the at least one or more pixel sensors to a respective capacitor; scanning the pixel array to determine the ionizing radiation source intensity; and generating a gain control signal based on the ionizing radiation source intensity.

### BRIEF DESCRIPTION OF THE DRAWINGS

FIG. 1 shows a high-level schematic diagram showing a readout integrated circuit (ROIC) component of an ionizing radiation image module.

FIG. 2 shows a more detailed view of a single pixel shown in FIG. 1.

FIG. 3A shows an example one-dimensional pixel array.

FIG. 3B shows an example two-dimensional pixel array.

FIG. 3C shows an example single pixel which may operate within a one-dimensional pixel array or two-dimensional pixel array.

FIG. 4 shows a more detailed view of an example single pixel as shown in FIG. 3.

FIG. 5A shows a first example of a gain adjustable CSA as shown in FIG. 4.

FIG. 5B shows a second example of a gain adjustable CSA as shown in FIG. 4.

FIG. 6A shows a first example of a variable gain amplifier as shown in FIG. 4.

FIG. 6B shows a second example of a variable gain amplifier as shown in FIG. 4.

FIG. 7A shows a detailed view of an example discriminator.

FIG. 7B shows a more detailed view of an example digital analog converter.

The drawings are not necessarily to scale. The drawings are merely schematic representations, not intended to portray specific parameters of the invention. The drawings are intended to depict only typical embodiments of the invention, and therefore should not be considered as limiting the scope of the invention. In the drawings, like numbering represents like elements.

### DETAILED DESCRIPTION OF THE INVENTION

Illustrative embodiments will now be described more fully herein with reference to the accompanying drawings, in which exemplary embodiments are shown. This disclosure may, however, be embodied in many different forms and should not be construed as limited to the exemplary embodiments set forth herein. Rather, these exemplary embodiments are provided so that this disclosure will be thorough and complete and will fully convey the scope of this disclosure to those skilled in the art. In the description, details of well-known features and techniques may be omitted to avoid unnecessarily obscuring the presented embodiments.

The terminology used herein is for the purpose of describing particular embodiments only and is not intended to be limiting of this disclosure. As used herein, the singular forms "a", "an", and "the" are intended to include the plural forms as well, unless the context clearly indicates otherwise. Furthermore, the use of the terms "a", "an", etc., do not denote a limitation of quantity, but rather denote the presence of at least one of the referenced items. It will be further understood that the terms "comprises" and/or "comprising", or rectify "includes" and/or "including", when used in this specification, specify the presence of stated features, regions, integers, steps, operations, elements, and/or components, but do not preclude the presence or addition of one or more other features, regions, integers, steps, operations, elements, components, and/or groups thereof.

Embodiments of the present invention provide a computer-implemented method for setting an amplification gain of a pixel array. Specifically, among other things, embodiments of the present invention provide a computer-implemented infrastructure comprising: receiving an electrical signal from an ionizing radiation source at one or more pixel sensors of a plurality of pixel sensors within the pixel array; setting an amplification gain of the electrical signal at a charge sensitive amplifier by turning a switch on or off, wherein the switch connects the at least one or more pixel sensors to a respective capacitor; scanning the pixel array to determine the ionizing radiation source intensity; and generating a gain control signal based on the ionizing radiation source intensity.

One of the key innovative aspects in ionizing radiation imaging is the energy-resolved counting of the photons which are let through or transmitted by the object being analyzed when being exposed to ionizing radiation. Depending on the number and energy the transmitted ionized particles or photons have, it can be concluded, after a slice image reconstruction step, through which types of material the ionizing radiations have traveled. In particular, this allows for the identification of different parts, tissues, and materials within a human body, or a subject.

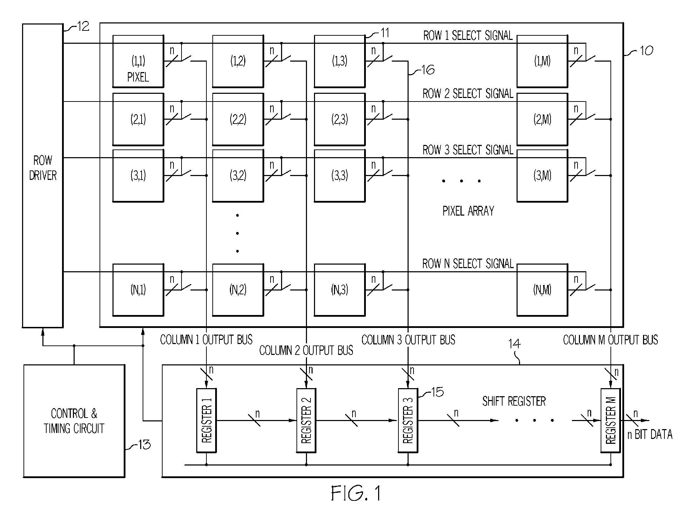

Referring now to FIG. 1, a photon quantum counting ionizing radiation image sensor module is depicted which may include a two-dimensional pixel array 10 including any number of rows and columns of single pixels 11, a row driver 12, a control and timing circuit 13, a shift register 14 including register 15, and a column output bus line 16. In some examples, the shift register 14 may include any number of registers. In some examples, any number of column output bus lines may be used.

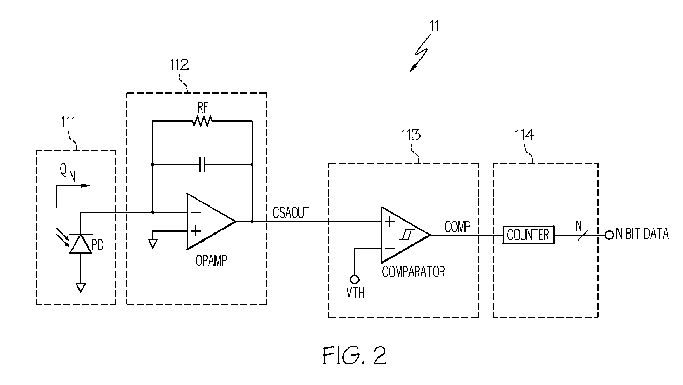

FIG. 2 depicts an example single pixel integrated circuit 11 to improve the dynamic range of ionizing radiation sensor readout. The integrated circuit consists of an ionizing radiation input area comprising a sensor 111, power detection amplifier 112, comparator 113, and counter 114.

The sensor 111 receives optical signals and outputs electric pulses corresponding to the received optical signals. For example, the sensor 111 detects photons and generates respective pulse currents corresponding to the detected photons. Such a sensor 111 may be implemented using a photodiode (PD) that generates current in response to light, for example. A photodiode is a type of photodetector capable of converting light into either current or voltage, depending upon the mode of operation. The sensor 111 may be a digital charge-coupled device (CCD) or complementary metal-oxide-semiconductor (CMOS), and the incident light could include light of different wavelengths, including ionizing radiation photons, as only an example. Additionally, the sensor 111 may include plural photon detectors, such as respectively detecting photons for different sensors.

The power detection amplifier 112 may be used to convert the small output current of a photodiode transducer to a fast responding voltage. In one example, a power detection amplifier 112 (OPAMP) may be used to convert the electrical pulses into a voltage (shown in FIG. 2 as current sense amplifier output or CSAOUT). An operational amplifier (OPAMP) is a DC-coupled high-gain electronic voltage amplifier with a differential input and, usually, a single-ended output. In the example described herein, the power detection amplifier is used in a single photon ionizing radiation readout circuit. In other examples, the power detection amplifier 112 also can be used with other readout circuits.

When ionizing radiation strikes the photodiode 111, signal charge pulses (Q_{IN}) are generated, with amplitude according to the particle energy. As a result, the signal charge pulses (Q_{IN}) are all integrated into a feedback capacity array (CF1 to CFn) and then output as voltage pulses (CSAOUT). At this point, since the feedback resistance (RF) for direct current is connected in parallel to the feedback capacity (CF), the output becomes voltage pluses that slowly discharge. Thus, the signal charge pulses are converted into voltage pulses. The Q_{IN} is connected to the negative ("-") node of the power detection amplifier 112. An amplifier array is connected to the positive ("+") node of the power detection amplifier 112. The feedback resistance (RF) and the feedback capacity array (CF1 to CFn) are connected between the amplifier array output nodes ("+" and "-").

A pixel 11 may include one or more comparators 113. A comparator 113 compares the voltage pulses output by the power detection amplifier 112, a predefined voltage threshold (VTH), and outputs the digital comparison result (COMP). In one example, the comparator 113 may serve to review the amplified pulse signal for a lower threshold (e.g., with pulse signals that are greater than this threshold being identified as representing photons). In another example, the comparator 113 may also discriminate the amplified pulse signal for an upper threshold for potentially discriminating out pulse signals that are too high.

The comparator 113 is connected to the positive (+) node of the power detection amplifier 112. The comparator 112 produces the voltage output (CSAOUT). The comparator's negative (-) node receives the predefined voltage threshold (VTH). The comparator 113 compares the CSAOUT from the power detection amplifier 112 and the VTH. It produces the compared value (COMP) from the high to the low (width) when the CSAOUT state is dropped from the VTH.

In one example, only one counter may be used for one pixel. The counter 114 may be configured to operate on an input voltage or current to count photons that are passed through the comparator 113. The counter 114 counts the number of photons detected for the respective pixel based upon an output of the comparator. In other words, the counter 114 counts the COMP from the comparator 113. When a photon is emitted, a COMP is produced. The total energy from the ionizing radiation may be equal to the pulse number of the COMP.

The pixel output data from pixel 11 may be comparable to the pixel photodiode which was reflected from the ionizing radiation and, therefore, the counted COMP from the counter 114. The resolution of counter 114 may be the same as the N-bit number of the pixel data. The counted pixel data is transmitted to the buffer and stored temporary at a buffer. The pixel data may be transmitted to an outside circuit or device. In some examples, the pixel data can be transmitted via a N-bit parallel bus or a serial bus.

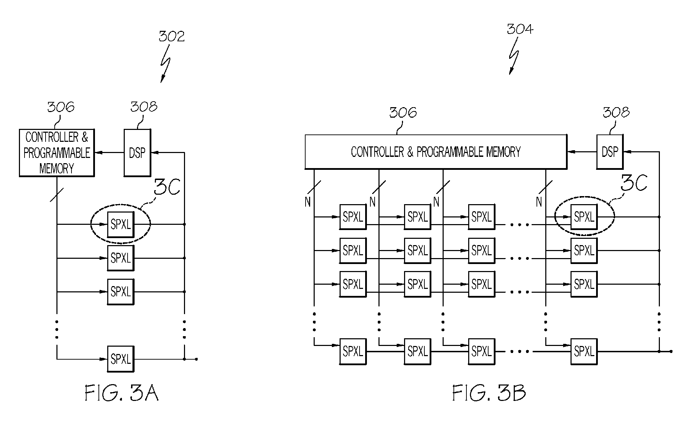

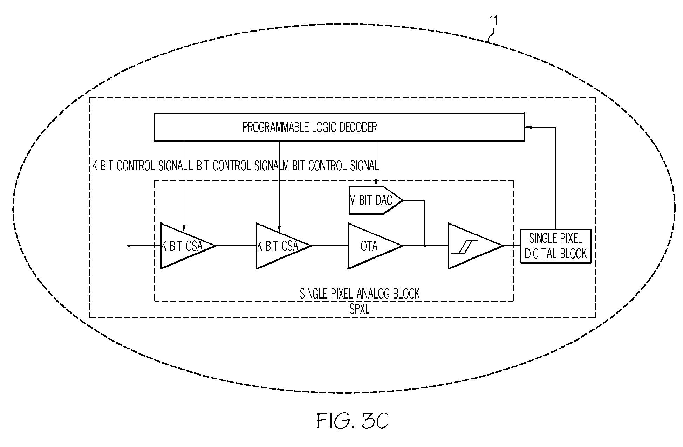

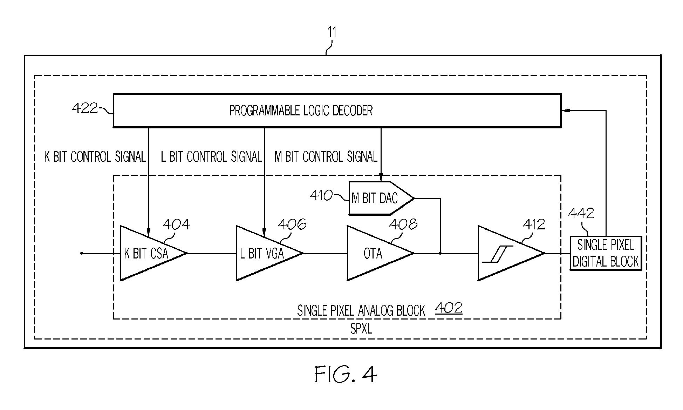

FIG. 3A shows an example one-dimensional pixel array. FIG. 3B shows an example two-dimensional pixel array. Each pixel array (one-dimensional pixel array 302 and two-dimensional pixel array 304) include a controller and programmable memory 306 and a digital signal processor (DSP) 308. FIG. 3C shows an example single pixel (SPXL) which may operate within a one-dimensional pixel array or two-dimensional pixel array. A detailed view of the components of single pixel 11 are shown in FIG. 4 and discussed in detail.

FIG. 4 shows a more detailed view of the components of single pixel 11 of FIG. 3C. Single pixel 11 includes single pixel analog block 402, programmable logic decoder 422 and single pixel digital block 442. Single pixel analog block 402 includes K-bit CSA 404, L-bit VBA 406, operational transconductance amplifier (OTA) 408, M-bit digital analog converter (DAC) 410 and current comparator 412.

Ionizing radiation is radiation with enough energy so that during an interaction with an atom, it can remove tightly bound electrons from the orbit of an atom, causing the atom to become charged or ionized. X-rays are one type of ionizing radiation. In other examples, the ionization radiation may include gamma rays, alpha rays, beta rays, cosmic rays, and the like.

In one example, a control method for the image enhancement of the visual intensity of an ionizing radiation (e.g., X-ray, gamma ray, alpha ray, beta ray) by controlling the variation of pixel gain differences is described. The method includes detecting the feedbacks in each pixel in order to gain a uniform image by increasing or decreasing the currents for the charge sensitive amplifier (CSA) to control the variation of pixel gain differences.

The controller and programmable memory 306 controls a pre-scanning calibration pixel test. Results from the calibration test are used to produce the pixel inputs for a K-bit control signal, L-bit control signal and M-bit control signal. This information is stored in the programmable memory.

The calibration test may be performed by the digital signal processor (DSP) 308 to operate on calibration test input in the readout integrated circuit (ROIC). The DSP 308 receives the pixel data feedback (from serial or parallel) and analyzes it. The feedback data may be stored in the controller and programmable memory 306. Corrective action for the sensitivity variation of the analog blocks may be taken based on the variation of the feedback data determined during calibration.

Each single pixel 11 is an ionizing radiation readout integrated circuit that detects a voltage at the sensor (e.g., photodiode) and converts the voltage to the K-bit. The programmable logic decoder 422 receives a pulse signal. The programmable logic decoder 422 includes a digital counter block configured to count the number of photons of the pulse signal. The programmable logic decoder 422 produces a digital data from the counted photons that are produced when radiation energy is emitted. The programmable logic decoder 422 produces the (KxLxM bit) control signals for CSA, VGA, and DAC control, as discussed in more detail below.

The K-bit CSA 404 receives a K-bit control signal from the programmable logic decoder 422. The K-bit CSA 404 varies the output to produce high image quality by adjusting the gain based on the K-bit control signal. The gain may be changed using a digital signal. The K-bit control signal is associated with the source intensity of the pixel ionizing radiation.

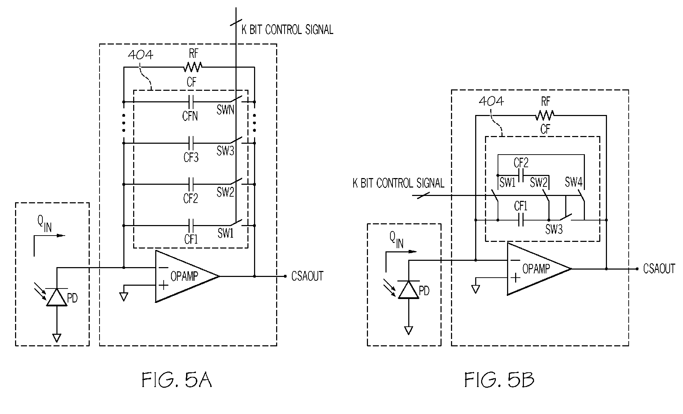

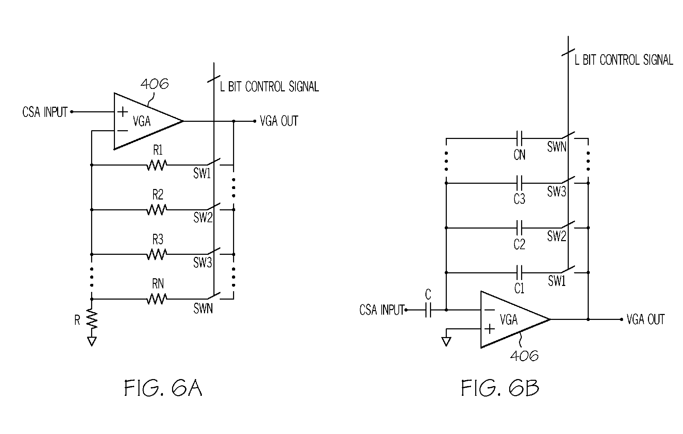

FIGS. 5A and 5B illustrate two example gain adjustable charge sensitive amplifiers. The CSA produces a CSAOUT. The L-bit variable gain amplifier (VGA) 406 converts and changes the CSA output (CSAOUT) to the L-bit. The L-bit VGA 406 increases the image quality by amplification based on an L-bit control signal received from the programmable logic decoder 422. FIGS. 6A and 6B illustrate two example VGA components. FIG. 6A shows a resistor type VGA 406. FIG. 6B shows a capacitor type VGA 406. A variable-gain or voltage-controlled amplifier is an electronic amplifier that varies its gain depending on a control voltage. For each VGA, CSA input is received and VGA out (VGA OUT) is generated as output.

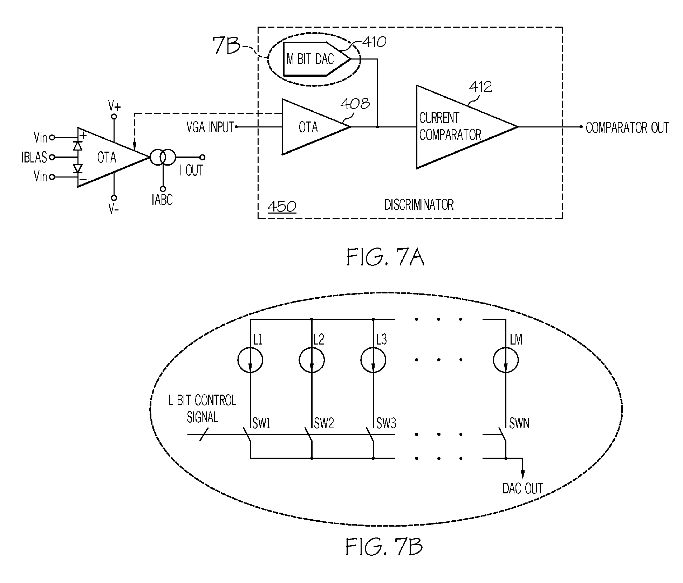

Referring back to FIG. 4, an M-bit digital analog converter (DAC) 410 may be used as a discriminator to improve the variation of the pixel gain differences. FIG. 7A shows a detailed view of a discriminator 450. FIG. 7B shows a detailed view of a digital analog converter (DAC). The discriminator 450 includes OTA 408, M-bit DAC 410 and current comparator 412. The discriminator 450 corrects the pixel gain of the individual pixel gain to M-bit. The discriminator 450 receives VGA input and produces comparator out as output, as shown in FIG.7B. Thus, the ROIC of the present invention solves the uniform image intensity issue of a photon by dynamically adjusting image intensity.

In addition to the above described embodiments, embodiments can also be implemented through computer readable code/instructions in/on a non-transitory medium (e.g., a computer readable medium), to control at least one processing device, such as a processor or computer, to implement any above described embodiment. The medium can correspond to any defined, measurable, and tangible structure permitting the storing and/or transmission of the computer readable code.

The media may also include (e.g., in combination with the computer readable code), data files, data structures, and the like. One or more embodiments of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Computer readable code may include both machine code, such as produced by a compiler, and files containing higher level code that may be executed by the computer using an interpreter, for example. The media may also be a distributed network, so that the computer readable code is stored and executed in a distributed fashion. Still further, as only an example, the processing element could include a processor or a computer processor, and processing elements may be distributed and/or included in a single device.

While aspects of the present invention has been particularly shown and described with reference to differing embodiments thereof, it should be understood that these embodiments should be considered in a descriptive sense only and not for purposes of limitation. Descriptions of features or aspects within each embodiment should typically be considered as available for other similar features or aspects in the remaining embodiments. Suitable results may equally be achieved if the described techniques are performed in a different order and/or if components in a described system, architecture, device, or circuit are combined in a different manner and/or replaced or supplemented by other components or their equivalents.

Thus, although a few embodiments have been shown and described, with additional embodiments being equally available, it would be appreciated by those skilled in the art that changes may be made in these embodiments without departing from the principles of the invention, the scope of which is defined in the claims and their equivalents.

## Claims

1. Integrated circuit module configured to determine an amplification gain of a pixel array, comprising:
a pixel array, wherein each pixel within the pixel array comprises a pixel sensor configured to receive an electrical signal from an ionizing radiation source; and a charge sensitive amplifier comprising a capacitor and a switch for connecting the pixel sensor to the capacitor, the charge sensitive amplifier configured to determine the amplification gain of the electrical signal by turning the switch on or off; and
a controller configured to scan the pixel array to determine an ionizing radiation source intensity and generate a gain control signal based on the ionizing radiation source intensity.

2. The integrated circuit module of claim 1, wherein the integrated circuit module comprises at least one of the following features:
the switch is turned on or off in response to the gain control signal;
the gain control signal is stored in a programmable memory block;
the ionizing radiation source intensity is determined based on a radiation generated by the ionizing radiation source;
the pixel array comprises one of a one-dimensional pixel array or two-dimensional pixel array;
the charge sensitive amplifier is further configured to convert the electrical signal into a voltage; and/or
the charge sensitive amplifier is further configured to convert the electrical signal into a voltage, wherein each pixel of the pixel array further comprises a comparator configured to compare the voltage derived from the electrical signal with a reference voltage to discriminate whether the electrical signal from the pixel sensor represents a photon detection; and a counter configured to count a photon detection for the pixel based upon an output of the comparator.

3. Computer-implemented method for setting an amplification gain of a pixel array, comprising:
receiving an electrical signal from an ionizing radiation source at one or more pixel sensors of a plurality of pixel sensors within the pixel array;
setting an amplification gain of the electrical signal at a charge sensitive amplifier by turning a switch on or off, wherein the switch connects the at least one or more pixel sensors to a respective capacitor;.
scanning the pixel array to determine an ionizing radiation source intensity; and
generating a gain control signal based on the ionizing radiation source intensity.

4. The computer-implemented method of claim 3, wherein the step of turning the switch on or off is in response to a gain control signal.

5. The computer-implemented method of claim 3, further comprising storing the gain control signal in a memory.

6. The computer-implemented method of claim 3, wherein the step of determining the ionizing radiation source intensity is based on a radiation generated by the ionizing radiation source.

7. The computer-implemented method of claim 3, wherein the pixel array comprises one of a one-dimensional pixel array or two-dimensional pixel array.

8. The computer-implemented method of claim 3, converting the electrical signal into a voltage.

9. The computer-implemented method of claim 8, further comprising:
comparing the voltage derived from the electrical signal with a reference voltage to discriminate whether the electrical signal from the pixel sensor represents a photon detection; and
counting a photon detection based on the discrimination.

10. Computer-readable storage device storing computer instructions which, when executed, enables a computer system to set an amplification gain of a pixel array, the computer instructions comprising:
receiving an electrical signal from an ionizing radiation source at one or more pixel sensors of a plurality of pixel sensors within the pixel array;
setting an amplification gain of the electrical signal at a charge sensitive amplifier by turning a switch on or off, wherein the switch connects the at least one or more pixel sensors to a respective capacitor;.
scanning the pixel array to determine an ionizing radiation source intensity; and
generating a gain control signal based on the ionizing radiation source intensity.

11. The computer-readable storage device of claim 10, further comprising computer instructions for turning the switch on or off is in response to a gain control signal.

12. The computer-readable storage device of claim 10, further comprising computer instructions for storing the gain control signal.

13. The computer-readable storage device of claim 10, further comprising computer instructions for determining the ionizing radiation source intensity based on a radiation generated by the ionizing radiation source.

14. The computer-readable storage device of claim 10, further comprising computer instructions for converting the electrical signal into a voltage.

15. The computer-readable storage device of claim 10, wherein the ionization radiation source comprises an X-ray source.
